# EUROPÄISCHE PATENTSCHRIFT

(11) **EP 1 456 274 B1**
(45) Veröffentlichungstag und Bekanntmachung des Hinweises auf die Patenterteilung: **30.09.2009**
(21) Anmeldenummer: 02787933.7
(22) Anmeldetag: 11.12.2002
(51) Int. Cl.: C08G 18/79, C08G 18/28, C08G 18/10, C09J 175/04

(54) **Verwendung eines Isocyanatofunktionellen Silans als haftvermittelnden Zusatz in Polyurethan-Schmelzklebstoffen**
Use of an isocyanatofunctional silan as an adhesion promoter in polyurethane hot melt adhesives
Utilisation d'un silane à fonctionnalité isocyanate comme promoteur d'adhérence dans des colles à fusion

(30) Priorität: 20.12.2001 DE 10162642
(43) Veröffentlichungstag der Anmeldung: 15.09.2004
(73) Patentinhaber: Henkel AG & Co. KGaA, 40589 Düsseldorf (DE)
(72) Erfinder: KREBS, Michael, 40724 Hilden (DE); BROSA, Katja, 41469 Neuss (DE); FRANKEN, Uwe, 41542 Dormagen (DE); SCHEFFLER, Ingolf, 41470 Neuss (DE)
(86) Internationale Anmeldenummer: PCT/EP2002/014057
(87) Internationale Veröffentlichungsnummer: WO 2003/054049

(56) Entgegenhaltungen:
- EP-A- 0 194 742
- EP-A- 0 232 971
- EP-A- 1 006 132
- EP-A- 1 193 278
- WO-A-94/09046
- US-A- 4 031 120
- US-A- 4 687 533
- US-A- 6 133 395
- DATABASE WPI Section Ch, Week 199828 Derwent Publications Ltd., London, GB; Class A25, AN 1998-316780 XP002236171 & JP 10 114813 A (MITSUI TOATSU CHEM INC), 6. Mai 1998 (1998-05-06) in der Anmeldung erwähnt

## Beschreibung

Die vorliegende Erfindung betrifft die Verwendung isocyanatofunktionelle Silane als Haftvermittler für Polyurethan-Schmelzklebstoffe.

Reaktive Polyurethan- Klebstoffe, insbesondere einkomponentige feuchtigkeitshärtende Systeme, enthalten in der Regel bei Raumtemperatur flüssige Polymere mit Urethangruppen, ggf. Harnstoffgruppen und reaktiven Isocyanatgruppen. Für viele Anwendungsfälle sind diese Zusammensetzungen lösungsmittelfrei und sehr hochviskos und/oder pastös, sie werden bei Raumtemperatur oder bei leicht erhöhter Temperatur zwischen etwa 50°C und etwa 100°C verarbeitet.

Reaktive, einkomponentige, feuchtigkeitshärtende Polyurethan-Schmelzklebstoffe sind feuchtigkeitshärtende bzw. feuchtigkeitsvernetzende Klebstoffe, die bei Raumtemperatur fest sind und in Form ihrer Schmelze als Klebstoff appliziert werden, und deren polymere Bestandteile Urethangruppen sowie reaktionsfähige Isocyanatgruppen enthalten. Durch das Abkühlen dieser Schmelze nach dem Auftrag und Fügen der zu verbindenden Substrat-Teile erfolgt zunächst eine rasche physikalische Abbindung des Schmelzklebstoffes durch dessen Erstarren. Daran schließt sich eine chemische Reaktion der noch vorhandenen Isocyanatgruppen mit Feuchtigkeit aus der Umgebung zu einem vernetzten unschmelzbaren Klebstoff an. Reaktive Schmelzklebstoffe auf der Basis von Isocyanat-terminierten Polyurethanprepolymeren sind z.B. bei H.F. Huber und H. Müller in "Shaping Reactive Hotmelts Using LMW Copolyesters", Adhesives Age, November 1987, Seite 32 bis 35 beschrieben.

Kaschierklebstoffe können entweder ähnlich aufgebaut sein wie die reaktiven Schmelzklebstoffe oder sie werden als einkomponentige Systeme aus der Lösung in organischen Lösungsmitteln appliziert, eine weitere Ausführungsform besteht aus zweikomponentigen lösungsmittelhaltigen oder lösungsmittelfreien Systemen, bei denen die polymeren Bestandteile der einen Komponente Urethangruppen sowie reaktionsfähige Isocyanatgruppen enthalten und, bei den zweikomponentigen Systemen, enthält die zweite Komponente Polymere bzw. Oligomere mit Hydroxylgruppen, Aminogruppen, Epoxigruppen und/oder Carboxylgruppen. Bei diesen zweikomponentigen Systemen werden die Isocyanat-gruppenhaltige Komponente und die zweite Komponente unmittelbar vor der Applikation gemischt, im Normalfall mit Hilfe eines Misch- und Dosiersystems.

Reaktive Polyurethan- Klebstoffe zeichnen sich durch ein sehr hohes Leistungsprofil aus. Daher konnten in den letzten Jahren zunehmend neue Anwendungen für diese Klebstoffe erschlossen werden. Zusammensetzungen für derartige Klebstoffe sind bereits aus sehr vielen Patentanmeldungen und sonstigen Veröffentlichungen bekannt.

Um eine alterungsbeständige Haftung auf vielen Substraten, insbesondere auf mineralischen Oberflächen, Glas oder Metallen, zu gewährleisten, werden den Polyurethan-Zusammensetzungen haftvermittelnde Substanzen zugesetzt. Bekannt ist ein Zusatz von niedermolekularen, organofunktionellen Silanen, wie z.B. 3-Isocyanatopropyltrimethoxysilan, 3-Isocyanatopropyltriethoxysilan, 3-Methacryloxypropylalkoxysilane, 3-Glycidoxypropylalkoxysilane, 3-Mercaptopropylalkoxysilane, 3-Aminopropylalkoxysilane, 2'-Aminoethyl-3-Aminopropylalkoxysilane oder Vinylalkoxysilane, siehe hierzu z. B. K.L. Mittal (Ed.), "Silanes and other Coupling Agents", Festschrift zu Ehren v. E. P: Plueddemann, 1992, insbesondere S. 3-19, 21-47 und 215-228 oder in E. P. Plueddemann, "Silane Coupling Agents", Plenum Press, New York, 1982. Außer in den vorgenannten Monographien wird diese Vorgehensweise in einer Vielzahl von Patentanmeldungen beschrieben.

Obwohl ein Zusatz von niedermolekularen, organofunktionellen Silanen der vorgenannten Art zu Polyurethan- Klebstoffen durchaus die erwünschte haftvermittelnde Wirkung zeigt, hat diese Vorgehensweise eine Reihe von gravierenden Nachteilen. Der Zusatz der vorgenannten isocyanatofunktionellen Silane ist aus arbeitshygienischen Gründen insbesondere bei heiß applizierten Polyurethansystemen bedenklich, da diese als sehr toxisch beim Einatmen einzustufen sind und beim Einatmen Bronchialasthma hervorrufen können, daß heißt eine sensibilisierende Wirkung auf den Atemtrakt haben. Die epoxyfunktionellen, methacrylfunktionellen und vinylfunktionellen Alkoxysilane weisen in Polyurethan-Zusammensetzungen nur eine sehr begrenzte Wirksamkeit auf, da sie nicht in das Polyurethangerüst der reaktiven Polyurethane mit eingebaut werden können. Die mercaptofunktionellen Alkoxysilane sind zwar gegenüber Isocyanatgruppen reaktiv und werden somit in das Polyurethangerüst mit eingebaut, wegen ihrer Monofunktionalität haben sie jedoch kettenabbrechende Wirkung, so daß diese Verbindungen einen negativen Einfluß auf die Festigkeit derartiger Klebstoffe haben, insbesondere wenn größere Mengen an Haftvermittelnder Substanz zugesetzt werden muß. Wegen ihrer hohen Funktionalität und ihrer Basizität führt die Verwendung von aminofunktionellen Alkoxysilanen häufig zu Stabilitätsproblemen und zur Vergelung während der Lagerung und Handhabung von Polyurethanklebstoffsystemen.

Die JP-10114813 A beschreibt eine flüssige Polyurethanklebstoff-Zusammensetzung enthaltend ein Polyurethanprepolymer mit IsocyanatEndgruppen und ein Addukt einer Aminosilanverbindung oder einer Mercaptosilanverbindung mit einem organischen Polyisocyanat sowie dem Zusatz einer Epoxysilanverbindung. Diese Zusammensetzungen sollen als Klebstoffe, Dichtstoffe oder Farben Verwendung finden und gute Haftung auf Metallen, Glas, Beton und dergleichen haben und lagerstabil sein und für die Bauindustrie geeignet sein. Weitere Anwendungen sind dieser Schrift nicht zu entnehmen.

Die JP-2000128949 A beschreibt einkomponentige flüssige Polyurethan-Zusammensetzungen, die feuchtigkeitshärtend sind und die ein Polyurethanprepolymer und eine Silanverbindung enthalten, wobei die Silanverbindung 1,5 oder mehr Isocyanatgruppen und 1,5 oder mehr hydrolisierbare Alkoxygruppen pro Molekül aufweisen soll. Die Silanverbindung soll hergestellt werden durch Addition eines Polyisocyanats mit 3 oder mehr Isocyanatgruppen per Molekül mit einem Alkoxysilan mit sekundären Aminogruppen und/oder einer Silanverbindung mit Lysinstruktur, hergestellt durch Addition von Lysindiisocyanat mit 2 oder 3 Isocyanatgruppen mit einem Aminoalkoxysilan mit sekundären Aminogruppen. Diese Zusammensetzungen sollen als Dichtungsmaterial für Automobil-Anwendungen oder als Beschichtungsmassen für die Bauindustrie geeignet sein und gute primerlose Haftung und Härtungseigenschaften und Resistenz gegen Aufschäumen haben.

Die WO-9836007 A1 beschreibt eine Polyurethandichtstoff Zusammensetzung zum Kleben von Scheiben in der Automobilherstellung. Neben einem Polyurethanprepolymer mit einer Isocyanat-Funktionalität von mindestens 2,0 und einem durchschnittlichen Molekulargewicht von mindestens 2000 sowie einem Katalysator sollen diese Zusammensetzungen ein Addukt einer isocyanatreaktiven Silanverbindung und eines Polyisocyanats enthalten. Diese Schrift führt aus, daß diese Polyurethandichtstoff-Zusammensetzung keine Primeranwendung benötigt und eine gute Haftung auf säureresistenten Lackoberflächen aufweist.

Weiterhin ist es bekannt, höherfunktionelle Diisocyanate wie das Biuretisierungsprodukt des Hexamethylendiisocyanates (HDI), bekannt als "Desmodur N 100", Fa. Bayer, an aminofunktionelle Silanmischungen als haftvermittelnde Komponenten einzusetzen. Nachteilig bei dieser Vorgehensweise ist die thermische Instabilität des Desmodur N, das unter thermischer Belastung, wie sie z.B. bei der Applikation von Schmelzklebstoffen auftritt, zur Rückspaltung zum leicht flüchtigen Hexamethylendiisocyanat neigt. Außerdem sind derartige Produkte sehr hochviskos und sie beeinflussen die Schmelzstabilität von heiß oder warm applizierten Klebstoffen selbst bei geringen Zugabemengen von 0,5 bis 2 Gew.% negativ.

Weiterhin bekannt ist die Verwendung von Umsetzungsprodukten aus 3-Isocyanatomethyl-3,5,5-trimethycyclohexylisocyanat (Isophorondiisocyanat, IPDI) mit aminofunktionellen Alkoxysilanen wie z.B. dem 3-Aminopropyltriethoxysilan. Vorteil dieser Zusammensetzungen ist ihre niedrige Viskosität, sie lassen sich jedoch ohne großen Aufwand nicht frei von monomerem IPDI herstellen. Für Schmelzklebstoffverarbeitungen sind derartige Zusammensetzungen aus toxikologischer Sicht wegen des hohen IPDI-Dampfdruckes kaum geeignet.

Angesichts dieses Standes der Technik haben sich die Erfinder die Aufgabe gestellt, eine Verwendung haftvermittelnder Zusätze für Polyurethan-Schmelzklebstoffe bereitzustellen, die einen geringen Dampfdruck an monomerem Isocyanat aufweisen, niedrige Viskosität besitzen und gute Schmelzstabilität bei einem breiten Haftungsspektrum aufweisen.

Die erfindungsgemäße Lösung der Aufgabe ist den Patentansprüchen zu entnehmen, sie beruht im wesentlichen in der Bereitstellung von Reaktionsprodukten eines schwer flüchtigen aliphatischen oder cycloaliphatischen Polyisocyanates mit einem organofunktionellen Silan, das isocyanatreaktive Gruppen aufweist, die Zerewitinoff-aktiven Wasserstoff haben. Der Gegenstand der vorliegenden Erfindung ist die Verwendung der sogenannten isocyanatofunktionelle Silane als haftvermittelnden Zusatz in Polyurethanschmelzklebstoffen. Besonders geeignet sind monomerenarme Klebstoffe, wie sie beispielsweise in der WO01/4034 sowie den noch unveröffentlichten Schriften DE 10132571.1 und DE 10150722.4 beschrieben sind.

Das eingesetzte "schwer flüchtige" Polyisocyanat zur Herstellung des erfindungsgemäßen isocyanatofunktionellen Silans soll dabei einen wesentlich niedrigeren Dampfdruck als das IPDI aufweisen, d.h. der Dampfdruck des Polyisocyanates soll kleiner als 5* 10⁻⁵ hPa bei 20 °C sein. Dabei kann es sich erfindungsgemäß um ein schwer flüchtiges Diisocyanat wie beispielsweise das Dimerfettsäure-Diisocyanat oder das 1,12-Dodecandiisocyanat oder um Polyisocyanate mit höherer Funktionalität und / oder höherem Molekulargewicht handeln, vorzugsweise haben die Polyisocyanate mit einem Molekulargewicht unter etwa 800 3 Isocyanatgruppen pro Molekül.

Die zur Umsetzung geeigneten organofunktionellen Silane sollen eine Funktionalität von kleiner oder gleich 1,3, vorzugsweise kleiner oder gleich 1,2, gegenüber dem Polyisocyanat aufweisen. Als NCO-reaktive Gruppen kommen für das organofunktionelle Silan Hydroxylgruppen, vorzugsweise Mercaptogruppen und, besonders bevorzugt, sekundäre Aminogruppen in Frage.

Als einzusetzendes Polyisocyanat eignet sich das Isocyanurat des Hexamethylendiisocyanates, z.B. bekannt unter dem Handelsnamen "Desmodur N 3300" von der Fa. Bayer, weiterhin eignen sich prinzipiell die Isocyanuratisierungsprodukte anderer aliphatischer und cycloaliphatischer Diisocyanate wie z.B. des IPDI, z.B. bekannt unter dem Handelsnamen "IPDI-T 1890" von der Fa. Degussa-Hüls oder auch Addukte aus aliphatischen oder cycloaliphatischen Isocyanaten an niedermolekulare Triole oder auch an Diole mit einem Molekulargewicht unter 2000, vorzugsweise unter 1000. Derartige Addukte sind hochmolekulare Polyisocyanate, ihre Verwendung als Ausgangsmaterial für Kleb- und Dichtstoffbindemittel wird in der WO01/40342 beschrieben, die dort beschriebenen hochmolekularen Diisocyanate sind für die Umsetzung mit den vorgenannten organofunktionellen Silanen sehr gut geeignet. Obwohl die vorgenannten Isocyanurate oder hochmolekularen Polyisocyanate in der Regel noch Spuren der zur Synthese eingesetzten Ausgangsisocyanate enthalten, erfüllt das Hauptprodukt das erfindungsgemäße Kriterium der Schwerflüchtigkeit. Die weiter oben gemachten Angaben des Dampfdruckes beziehen sich bei den Isocyanuraten, Addukten und hochmolekularen Diisocyanaten daher auf das Hauptprodukt und nicht auf die Verunreinigungen.

Beispiele für geeignete cycloaliphatische Polyisocyanate sind die Hydrierungsprodukte von aromatischen Diisocyanaten wie z.B. das 4,4'-Dicyclohexylmethandiisocyanat (H₁₂MDI), 1-Isocyanatomethyl-3-isocyanato-1,5,5-trimethylcyclohexan (Isophoron-düsocyanat, IPDI), Cyclohexan-1,4-diisocyanat, hydriertes Xylylen-diisocyanat (H₆XDI), 1-Methyl-2,4-diisocyanato-cyclohexan, m- oder p-Tetramethylxylendiisocyanat (m-TMXDI, p-TMXDI) und Dimerfettsäure-Diisocyanat. Beispiele für aliphatische Polyisocyanate sind Tetramethoxybutan-1,4-diisocyanat, Butan-1,4-diisocyanat, Hexan-1,6-diisocyanat (HDI), 1,6-Diisocyanato-2,2,4-trimethylhexan, 1,6-Diisocyanato-2,4,4-trimethylhexan, Lysindiisocyanat sowie 1,12-Dodecandiisocyanat (C₁₂DI).

Als Triole eignen sich insbesondere Trimethylolpropan und Glycerin, als Diole entweder α,ω-Alkandiole oder Polyethylenglycole, Polypropylenglycole oder Polyesterdiole mit einem Molekulargewicht unter 2000, vorzugsweise unter 1000.

Als organofunktionelle Silane eignen sich neben den vorgenannten Hydroxyfunktionellen Silanen insbesondere das 3-Mercaptopropyltriethoxysilan, das 3-Mercaptopropyltrimethoxysilan, das 3-Mercaptopropylalkyldiethoxysilan sowie insbesondere das N-(n-Butyl)-3-aminopropyltrimethoxysilan, das N-(n-Butyl)-3-aminopropyltriethoxysilan, das N-(n-Butyl)-3-aminopropylalkoxydiethoxysilan sowie das Bis-(3-triethoxysilylpropyl-)amin sowie das entsprechende Alkyldiethoxysilylderivat des letztgenannten Silans.

Obwohl es bevorzugt ist, reine sekundäre Aminosilane einzusetzen, können auch Gemische eingesetzt werden, diese sollen jedoch mindestens 70 Gew.%, vorzugsweise über 80 Gew.% an sekundärem Aminosilan enthalten.

Die erfindungsgemäßen isocyanatofunktionellen Silane eignen sich als haftvermittelnde Zusätze für Polyurethanschmelzklebstoffe, da sie keine flüchtigen und insbesondere keine toxischen flüchtigen Bestandteile aufweisen. Insbesondere eignen sie sich für solche Anwendungen, bei denen keine aufwendigen Lüftungseinrichtungen zur Verfügung stehen, d.h. zum Beispiel im Handwerker- und Consumerbereich. Ihr Zusatz zu den Klebstoffen ermöglicht Klebstoff-Formulierungen mit einem breiten Haftungsspektrum, das auch schwer verklebbare Substrate wie z.B. Metalle, mineralische Untergründe oder Glas sowie eine Vielzahl von Kunststoffen umfaßt. Polyurethanschmelzklebstoff-Zusammensetzungen, die die erfindungsgemäßen Silanzusätze enthalten, weisen eine hohe thermische Stabilität und Viskositätsstabilität in der Schmelze auf.

Die Schmelzklebstoffzusammensetzungen enthalten üblicherweise 0,1 bis etwa 5 Gew.%, vorzugsweise zwischen 0,5 und 2 Gew.%, des erfindungsgemäßen isocyanatofunktionellen Silans.

Die Erfindung wird in den nachfolgenden Ausführungsbeispielen näher erläutert, wobei der Auswahl der Beispiele keine Beschränkung des Umfanges des Erfindungsgegenstandes darstellen soll, sie sollen lediglich in modellhafter Weise einzelne Ausführungsformen und vorteilhafte Wirkungen der Erfindung darstellen. Alle in den nachfolgenden Beispielen gegebenen Mengenangaben sind Gewichtsteile bzw. Gewichtsprozent, falls nicht anders angegeben.

### Beispiele

### Beispiel 1

59 Gewichtsteilen eines isocyanuratisierten Hexamethylendiisocyanates (MW 504,6 g/mol, Equivalentgewicht 183 g/mol, Restgehalt an monomerem HDI kleiner 0,2 %) wurden mit 41 Gewichtsteilen N-(n-Butyl)-3-aminopropyltrimethoxysilan bis zur Konstanz des Isocyanatgehaltes umgesetzt. Die Viskosität des Umsetzungsproduktes betrug 1,7 Pas bei 60°C. Dieses Silanaddukt war in Substanz bei 60°C über 16 Stunden schmelzstabil. Bei Raumtemperatur ließ es sich ausgezeichnet handhaben.

### Beispiel 2 (Vergleich)

In Anlehnung die Lehre der WO9836007 wurden 69 Gewichtsteile IPDI und 31 Gewichtsteile eines üblichen, kommerziell erhältlichen Aminosilans auf Basis von Bis(3-triethoxysilylpropyl)amin (enthaltend 40% Bis(3-triethoxysilylpropyl)amin und 60% 3-Aminopropyltriethoxysilan) bis zur Konstanz des Isocyanatgehaltes umgesetzt. Es entstand ein hochviskoses isocyanatofunktionelles Silanaddukt mit einem NCO-Gehalt von 20% und einer Viskosität von 1 Pa·s bei 20° C. Der Monomergehalt an IPDI der Zubereitung betrug ca. 35%. Dieser übliche Haftvermittler ist bei 60°C weitestgehend schmelzstabil, innerhalb von 7 Stunden stieg die Viskosität von 150 mPas auf 200 mPas, also um ca. 30 % an. In Substanz, d. h. ohne den hohen Überschuß an monomerem IPDI, war dieses Silanaddukt jedoch schmelzinstabiler. Bei 130°C stieg die Viskosität innerhalb von 6 Stunden von 16 Pas auf 91 Pas, also um 470%, an.

### Beispiel 3

Gemäß der Lehre der noch unveröffentlichten DE 10150722.4 wurde aus 86,40 Teilen einer Mischung aus bei Raumtemperatur flüssigen, amorphen und kristallinen Polyestern mit der mittleren OHZ von 40,8 und 12,57 % Teilen 2,4'-MDI (Reinheit über 97 %) ein Schmelzklebstoff hergestellt. Diesem Schmelzklebstoff 1,03 Teile des Silan-Haftvermittlers aus Beispiel 1 zugesetzt. Die Viskosität bei 130°C betrug 6.500 mPas (Brookfield-Viskosimeter mit Thermosel). Der Schmelzklebstoff zeigte gute Schmelzstabilität und Verarbeitbarkeit. Nach 6 Stunden bei 130° C zeigte sich nur ein Viskositätsanstieg um 100%.

### Beispiel 4 (Vergleich)

Es wurde analog zu Beispiel 3 verfahren, jedoch wurde der Silan-Haftvermittler aus Beispiel 2 verwendet. Die Viskosität stieg nach 6 Stunden bei 130° C um 450% an.

Zur Überprüfung der Haftungseigenschaften der Klebstoff-Formulierungen aus Beispiel 3 und 4 wurden Substrate ausgewählt, die mit üblichen Polyurethan-Schmelzklebstoffen schwierig alterungsbeständig zu verkleben sind.

Nach 7-tägiger Aushärtung der verklebten Substrate bei Raumtemperatur wurden die Prüfkörper einem viertägigen Klimawechseltest, wie er in der Automobilindustrie (gemäß VW P 1200 Norm) üblich ist, ausgesetzt.

| | |
|---|---|
| Glas | + |
| V2A | + |
| Alu-roh 99.5 | +/- |
| Stahl-roh (ST37) | +/- |
| PMMA | + |
| PC | + |
| PS | + |
| hart-PVC | + |
| PA 6.6 natur | + |

Die Haftungsprüfungen führten in beiden Fällen zu etwa gleich guten Resultaten, jedoch wies der erfindungsgemäße Schmelzklebstoff eine wesentlich höhere Schmelzstabilität auf und zeigte keine Abgabe von leicht flüchtigem monomerem Isocyanat und keinerlei Rückspaltung eines leicht flüchtigen Isocyanates, so daß der erfindungsgemäße Schmelzklebstoff auch in arbeitshygienischer Hinsicht die besseren Eigenschaften aufweist.

## Patentansprüche

1. Verwendung eines Isocyanatofunktionellen Silans herstellbar aus einem schwerflüchtigen aliphatischen oder cycloaliphatischen Polyisocyanat mit einem Dampfdruck von kleiner als 5*10⁻⁵ hPa bei 20° C ausgewählt aus Dimerfettsäure-Diisocyanat, 1,12-Dodecandiisocyanat, Isocyanurat des Hexamethylendiisocyanates (HDI), Isocyanurat des Isophorondiisocyanats (IPDI) oder Addukten aus aliphatischen oder cycloaliphatischen Diisocyanate und niedermolekularen Triolen und einem organofunktionellen Silan mit NCOreaktiven Gruppen enthaltend Zerewitinoff-aktiven Wasserstoff als haftvermitteinden Zusatz in Polyurethan- Schmelzklebstoffen.

2. Isocyanatofunktionelles Silan nach Anspruch 1, **dadurch gekennzeichnet, daß** das organofunktionelle Silan eine Funktionalität von kleiner oder gleich 1,3 gegenüber dem Polyisocyanat aufweist.

3. Isocyanatofunktionelles Silan nach Anspruch 1 oder 2, **dadurch gekennzeichnet, daß** das organofunktionelle Silan als NCO-reaktive Gruppen Hydroxy-, Mercapto- und / oder sekundäre Aminogruppen aufweist.

## Claims

1. The use of an isocyanato-functional silane which may be produced from a not easily volatilized aliphatic or cycloaliphatic polyisocyanate with a vapor pressure of less than 5.10⁻⁵ hPa at 20°C, selected from dimeric fatty acid diisocyanate, 1,12-dodecane-diisocyanate, isocyanurate of hexamethylene-diisocyanate (HDI), isocyanurate of isophorone-diisocyanate (IPDI) or adducts of aliphatic or cycloaliphatic diisocyanates and low molecular weight triols and of an organofunctional silane with NCO-reactive groups containing Zerewitinoff-active hydrogen as tackifying additive in polyurethane hot-melt adhesives.

2. The isocyanato-functional silane according to claim 1, **characterized in that** the organofunctional silane has a functionality of less than or equal to 1.3 with respect to the polyisocyanate.

3. The isocyanato-functional silane according to claim 1 or 2, **characterized in that** the organofunctional silane has hydroxyl, mercapto and/or secondary amine groups as NCO-reactive groups.

## Revendications

1. Utilisation d'un silane à fonctionnalité isocyanate pouvant être préparé à partir d'un polyisocyanate aliphatique ou cycloaliphatique, peu volatil, présentant une tension de vapeur inférieure à 5*10⁻⁵ hPa à 20°C, choisi parmi le diisocyanate d'un acide gras dimère, le 1,12-dodécanedilsocyanate, l'isocyanurate de l'hexaméthylènediisocyanate (HDI), l'isocyanurate de l'isophoronediisocyanate (IPDI) ou les produits d'addition de diisocyanates aliphatiques ou cycloaliphatiques et de triols de bas poids moléculaire et d'un silane organofonctionnel présentant des groupes réactifs avec NCO contenant de l'hydrogène actif selon Zerewitinoff comme additif promoteur de l'adhérence dans les adhésifs en masse fondue à base de polyuréthane.

2. Silane à fonctionnalité isocyanate selon la revendication 1, **caractérisé en ce que** le silane organofonctionnel présente une fonctionnalité inférieure ou égale à 1,3 par rapport au polyisocyanate.

3. Silane isocyanatofonctionnel selon la revendication 1 ou 2, **caractérisé en ce que** le silane organofonctionnel présente, comme groupes réactifs avec NCO, des groupes hydroxy, mercapto et/ou amino secondaire.
